# EUROPÄISCHE PATENTSCHRIFT

(11) **EP 3 337 667 B1**
(45) Veröffentlichungstag und Bekanntmachung des Hinweises auf die Patenterteilung: **23.12.2020**
(21) Anmeldenummer: 16745127.7
(22) Anmeldetag: 01.08.2016
(51) Int. Cl.: B41J 3/407, G01N 21/90

(54) **DIREKTDRUCKMASCHINE UND VERFAHREN ZUR BEDRUCKUNG VON BEHÄLTERN MIT EINEM DIREKTDRUCK**
DIRECT PRINTING MACHINE, AND METHOD FOR PRINTING CONTAINERS USING DIRECT PRINTING
MACHINE D'IMPRESSION DIRECTE ET PROCÉDÉ POUR EFFECTUER UNE IMPRESSION DIRECTE SUR DES CONTENANTS

(30) Priorität: 21.08.2015 DE 102015216026
(43) Veröffentlichungstag der Anmeldung: 27.06.2018
(73) Patentinhaber: Krones AG, 93073 Neutraubling (DE)
(72) Erfinder: GERTLOWSKI, Georg, 93073 Neutraubling (DE); LINDNER, Peter, 93073 Neutraubling (DE)
(74) Vertreter: Grünecker Patent- und Rechtsanwälte PartG mbB
(86) Internationale Anmeldenummer: PCT/EP2016/068277
(87) Internationale Veröffentlichungsnummer: WO 2017/032553

(56) Entgegenhaltungen:
- EP-A1- 2 639 069
- EP-A1- 2 860 515
- EP-A2- 1 769 916
- EP-A2- 1 918 100
- WO-A2-03/106177

## Beschreibung

Die Erfindung betrifft eine Direktdruckmaschine und ein Verfahren zur Bedruckung von Behältern mit einem Direktdruck mit den Merkmalen des Oberbegriffs des Anspruchs 1 bzw. 13.

Bekannt ist, dass Behälter, wie beispielsweise Flaschen oder Dosen mit einem Direktdruck zur individuellen Kennzeichnung des Behälterinhalts versehen werden, wobei verschiedenfarbige Drucktinten mit mehreren Direktdruckköpfen direkt auf die Behälter in mehreren Durchläufen aufgebracht werden. Die Behälter werden zur Bedruckung in Behälteraufnahmen eines Transporteurs transportiert und mit den Direktdruckköpfen flächig bedruckt. Ein derartiger Direktdruckkopf ist beispielsweise ein Tintenstrahldruckkopf, der eine Vielzahl von Düsen aufweist, die typischerweise in einer oder mehreren Reihen am Direktdruckkopf angeordnet sind. Zur flächigen Bedruckung erfolgt zusätzlich eine Drehbewegung des Behälters mit der Behälteraufnahme um seine Längsachse und/oder eine Schwenkbewegung des Direktdruckkopfs im Wesentlichen senkrecht zur Düsenreihe. Das Druckbild selbst liegt als digitales Bild in einer Computersteuerung vor um die Direktdruckköpfe bzw. die Behälteraufnahmen zu steuern. Weiterhin wird die Drucktinte in einer nachfolgenden Aushärteeinrichtung über UV- oder Elektronenstrahlen zur Vernetzung gehärtet.

Aus der WO 2012 0/022746 ist eine Vorrichtung und ein Verfahren zur Bedruckung von Behältern bekannt, bei der auf einer rotierenden Maschine mehrere Behandlungsstationen mit jeweils mehreren Druckköpfen angeordnet sind, in denen die Behälter mit Transportelementen entlang einer geeigneten Bahn zu den einzelnen Druckköpfen verfahren werden.

Weiter ist aus der DE 10 2007 050 490 A1 eine Vorrichtung und ein Verfahren zur Bedruckung von Behältern bekannt, bei der die Behälter mit einem Rotor transportiert und daran angeordneten Druckstation jeweils von mehreren Druckköpfen bedruckt werden. Die Druckköpfe sind für einen Druckkopfwechsel bzw. einen Teildruckwechsel in eine Druckposition zu- und wegschalbar. Die Kontrolle des Direktdrucks erfolgt im Auslaufbereich des Rotors durch ein optoelektrisches Kontrollsystem.

Die EP 2 639 069 A1 offenbart ein Verfahren zum Feststellen von Fehlern in der Ausrichtung von Druckbildern und eine zur Durchführung des Verfahrens eingerichtete Druckstation.

Die EP 2 860 515 A1 offenbart eine Inspektionsvorrichtung und ein Verfahren zur optischen Inspektion einer Oberfläche eines zylindrischen Gegenstands und eine digitale Tintenstrahldruckeinrichtung.

Üblicherweise müssen jedoch die Druckköpfe in derartigen Direktdruckmaschinen immer wieder an verschiedene Behältergrößen angepasst werden. Nachteilig dabei ist, dass die einzelnen Druckköpfe durch die hohe Anforderung an die Qualität des Direktdrucks mit einer entsprechend hohen Präzision zueinander justiert werden müssen. Beispielsweise liegt die Pixelauflösung eines Direktdrucks bei 3/100 mm und folglich müssen die Direktdruckköpfe zueinander um etwa eine Größenordnung genauer justiert werden, damit ein qualitativ hochwertiges Druckbild entsteht. Es hat sich gezeigt, dass dazu ein hoher Aufwand bei der Einrichtung der Direktdruckmaschine notwendig ist, beispielsweise indem mehrfach Testdrucke erstellt und anschließend eine manuelle Feinjustage der Direktdruckköpfe erfolgt.

Aufgabe der vorliegenden Erfindung ist es daher, eine Direktdruckmaschine und ein Verfahren zur Bedruckung von Behältern mit einem Direktdruck bereitzustellen, bei denen das Justieren der Direktdruckköpfe bei der Maschineneinrichtung weniger aufwändig und damit kostengünstig ist.

Zur Lösung dieser Aufgabenstellung stellt die Erfindung eine Direktdruckmaschine mit den Merkmalen des Anspruchs 1 bereit.

Vorteilhafte Ausführungsformen der Erfindung sind in den Unteransprüchen genannt.

Dadurch, dass den Druckstationen mit separat justierbaren Direktdruckköpfen jeweils eine eigene Inspektionseinrichtung mit wenigstens einer Kamera zugeordnet ist, kann der Behälter nach dem Aufbringen eines Teildrucks mit der Kamera erfasst und kontrolliert werden. Folglich können die einzelnen Teildrucke bei der Kontrolle voneinander getrennt und dadurch besser ausgewertet werden. Darüber hinaus kann durch die Zuordnung der Kamera zur Druckstation eine besonders genaue und konstruktiv einfache Verbindung gewählt werden, die mit besonders geringeren Toleranzen behaftet ist. Dadurch kann die Lage der Teildrucke auf dem Behälter besonders genau kontrolliert und der Position des jeweiligen Direktdruckkopfs zugeordnet werden. Folglich kann also insgesamt die Lage der einzelnen Teildrucke auf dem Behälter hochgenau und zuverlässig bestimmt werden, so dass die Direktdruckköpfe auf dieser Basis besonders einfach und damit kostengünstig justiert werden können.

Die Direktdruckmaschine kann in einer Getränkeverarbeitungsanlage angeordnet sein. Die Direktdruckmaschine kann einer Füllanlage zum Abfüllen eines Produkts in die Behälter und/oder einem Verschließer nachgeordnet sein. Die Direktdruckmaschine kann dem Füllprozess aber auch vorgeschaltet sein und/oder einem Behälterherstellungsprozess direkt nachgeschaltet sein.

Die Behälter können dazu vorgesehen sein, Getränke, Hygieneartikel, Pasten, chemische, biologische und/oder pharmazeutische Produkte aufzunehmen. Im Allgemeinen können die Behälter für jegliche fließfähige bzw. abfüllbare Medien vorgesehen sein. Die Behälter können aus Kunststoff, Glas oder Metall bestehen, aber auch aus PET, PEN, HD-PE oder PP bestehen. Ferner sind Behälter mit Materialmischungen denkbar. Die Behälter können Flaschen, Dosen und/oder Tuben sein.

Der Transporteur kann als Karussell ausgebildet sein, das um eine vertikale Achse drehbar ist. "Vertikal" kann hier bedeuteten, dass dies die Richtung ist, die auf den Erdmittelpunkt gerichtet ist. Die Behälteraufnahmen können am Umfang des Karussells bzw. des Transporteurs angeordnet sein. Der Transporteur kann aber auch mit jeder anderen geeigneten in sich geschlossenen Transportbahn ausgebildet sein, an der die Behälteraufnahmen angeordnet sind.

Die Behälteraufnahmen können dazu ausgebildet sein, die Behälter während der Bedruckung gegenüber den Direktdruckköpfen zu verschieben und/oder zu verdrehen. Insbesondere können die Behälteraufnahmen dazu ausgebildet sein, die Behälter senkrecht und/oder parallel zu einer Druckrichtung der Direktdruckköpfe zu verschieben. "Druckrichtung der Direktdruckköpfe" kann hier bedeuten, dass dies die Abgaberichtung der Drucktropfen aus den Direktdruckköpfen einer Druckstation auf den zu bedruckenden Behälter ist. Die Behälteraufnahmen können jeweils eine Zentrierglocke, einen Drehteller, eine Verfahreinheit und/oder einen Direktantrieb umfassen.

Die Behälteraufnahmen können jeweils unmittelbar an der zugeordneten Druckstation angeordnet sein. Anders ausgedrückt, können die Direktdruckköpfe einer Druckstation einen Verbund mit der zugeordneten Behälteraufnahme bilden. Denkbar ist auch, dass die jeweilige Behälteraufnahme Teil der zugeordneten Druckstation ist.

Die mehreren separat justierbaren Direktdruckköpfe können in der Druckstation über einen Träger, eine Verfahreinheit oder dergleichen angeordnet sein. Die Direktdruckköpfe können mit einem Digital- bzw. Tintenstrahldruckverfahren arbeiten, beispielsweise "Drop on Demand", bei dem die Tinte mittels einer Vielzahl von Druckdüsen an den Behälter abgegeben wird. "Tintenstrahldruckverfahren" kann hier bedeuten, dass in Kammern einer Druckdüse ein plötzlicher Druckanstieg über Piezo- oder Thermoelement derart erzeugt wird, dass ein kleine Menge Drucktinte durch die Druckdüse gedrückt und als Drucktropfen an den Behälter abgegeben wird. Der Direktdruckkopf kann eine Vielzahl von Druckdüsen in einem Bereich von 100 bis 10000, insbesondere in einem Bereich von 500 bis 1100 Düsen aufweisen. Die Druckdüsen können in einer oder mehreren Düsenreihen angeordnet sein (beispielsweise 1-4), die insbesondere parallel zur Behälterachse angeordnet sind. Ebenso können die mehreren separat justierbaren Direktdruckköpfe als eine integrale Einheit ausgebildet sein, bei denen die Druckdüsen in mehreren separat justierbaren Düsenplatten angeordnet sind. "Separat justierbar" kann hier bedeuten, dass die Direktdruckköpfe und/oder deren Düsenplatten jeweils verschieb- und/oder verdrehbar sind. Jeder der Direktdruckköpfe kann dabei um eine, zwei oder drei Achsen verschieb- und/oder verdrehbar sein. Zur Justage der Direktdruckköpfe können Einstellschrauben vorgesehen sein. Beispielsweise können die Direktdruckköpfe an einer gemeinsamen Aufnahme angeordnet sein, die einen Justagemechanismus umfasst. Denkbar ist auch, dass der Justagemechanismus mit steuerbaren Aktuatoren ausgebildet ist. Dabei können die Bilder der Kamera ausgewertet und daraus Parameter zur Steuerung des Justagemechanismus berechnet werden.

"Teildrucke" kann hier bedeuten, dass dies einem Druckanteil des jeweiligen Direktdruckkopfs einer Druckstation in einer Druckfarbe entspricht. Die Druckfarben können hier beispielsweise Schwarz, Weiß, Cyan, Magenta oder Gelb bzw. jede beliebige andere Art der Druckfarbenkombination sein. Anders ausgedrückt, können die Druckstationen jeweils dazu ausgebildet sein, einen Behälter mit allen Farben des Direktdrucks jeweils mit einem Direktdruckkopf zu bedrucken.

Dass der "Druckstation jeweils eine eigene Inspektionseinrichtung mit wenigstens einer Kamera zugeordnet ist" kann hier bedeuten, dass jede Druckstation eine Kamera zur Inspektion und/ oder Justage umfasst. Beispielsweise umfasst dann eine Direktdruckmaschine mit einem Transporteur, der 12 Behälteraufnahmen umfasst dann auch 12 Druckstationen und 12 Kameras.

Denkbar ist, dass die Kamera einen Matrix- oder Zeilensensor zur Bildaufnahme und ein Objektiv umfasst. Die Inspektionseinrichtung kann ferner eine Bildverarbeitungseinrichtung umfassen oder damit verbunden sein. Denkbar ist, dass jede Inspektionseinrichtung der Direktdruckmaschine eine eigene Bildverarbeitungseinrichtung umfasst oder, dass alle Inspektionseinrichtungen mit einer Bildverarbeitungseinrichtung verbunden sind. Die Bildverarbeitungseinrichtungen können jeweils in den Kameras integriert sein. Die Druckstationen können mit induktiven Energie- und/oder Datenübertragungseinheiten ausgebildet sein, um deren jeweilige Inspektionseinrichtung bzw. vorzugsweise die Kamera mit Energie zu versorgen und/oder deren Daten zu übertragen.

Mit "Lage der Teildrucke auf dem Behälter" kann hier gemeint sein, dass dies die Lage der Teildrucke auf dem Behälter ist. Ebenso oder zusätzlich kann dies bedeuten, dass dies die Lagen jeweils der einzelnen Teildrucke, die Lage oder die Lagen einer Kombination mehrerer Teildrucke und/oder die Lage aller Teildrucke auf dem Behälter (beispielsweise des gesamten Druckbilds) zusammen ist. Ebenso oder zusätzlich kann dies bedeuten, dass dies die relative Lage der Teildrucke zueinander auf dem Behälter und/oder auf einer abgewickelten Behälteroberfläche ist. Die Lage der Teildrucke auf dem Behälter kann mit der Inspektionseinrichtung über einen Teilbereich oder über den gesamten 360° Umfang des Behälters kontrollierbar sein.

Die Kamera ist mit einer Verfahreinheit verfahrbar, die vorzugsweise einen Linearmotor umfasst. Dadurch ist es möglich, die Kamera zu einer oder mehreren Inspektionspositionen zu verfahren, so dass die Teildrucke aus einer möglichst optimalen Blickrichtung inspiziert werden. Beispielsweise kann die Verfahreinheit dazu ausgebildet sein, die Kamera zu mit den Druckpositionen der Direktdruckköpfe korrespondierenden Inspektionspositionen zu verfahren. Dadurch werden die Teildrucke jeweils aus der gleichen Blickrichtung unmittelbar beim oder nach dem Drucken inspiziert. Denkbar ist auch, dass die Kamera zu einzelnen Bereichen des Teildrucks mit der Verfahreinheit verfahrbar ist, so dass sie beispielsweise mit einem Makro- oder Mikroskopobjektiv besonders stark vergrößert werden können. Der Linearmotor kann einen Langstator und einen Läufer mit einer Rollenführung umfassen. Vorzugsweise kann die induktive Energie- und/oder Datenübertragungseinheit für die Inspektionseinrichtung, insbesondere für die Kamera in den Linearmotor integriert sein.

Die Verfahreinheit ist dazu ausgebildet, die zugeordnete Behälteraufnahme gemeinsam mit der Kamera gegenüber den Direktdruckköpfen zu verfahren. Dadurch kann eine bereits zum Verfahren der Behälteraufnahme genutzte Verfahreinheit zusätzlich zum Verfahren der Kamera genutzt werden. Folglich ist der Aufwand für die Verfahreinheit besonders gering. Beispielsweise können die Druckstationen jeweils die Direktdruckköpfe und die Verfahreinheit mit der Behälteraufnahme und mit der Kamera umfassen. Mit der Verfahreinheit ist es so möglich, die Behälteraufnahme zusammen mit der Kamera zu den jeweiligen Direktdruckköpfen entlang einer Bahn zu verfahren, so dass der Behälter nach dem Aufbringen des jeweiligen Teildrucks unmittelbar inspiziert wird. Beispielsweise können die separat justierbaren Direktdruckköpfe wenigstens teilweise vertikal übereinander und senkrecht zur Transportbahn angeordnet sein. Die Verfahreinheit kann dann die Behälteraufnahme bzw. die Kamera vertikal zu den Direktdruckköpfen verfahren.

Alternativ ist die Verfahreinheit dazu ausgebildet, die Direktdruckköpfe gemeinsam mit der Kamera gegenüber der zugeordneten Behälteraufnahme zu verfahren. Auch hier ist der Aufwand für die Verfahreinheit besonders gering, da bereits auf die vorhandene Verfahreinheit für die Direktdruckköpfe zurückgegriffen werden kann. Ferner ist die Kamera so gegenüber den Direktdruckköpfen fest justiert und arbeitet dabei besonders genau. Beispielsweise kann der Transporteur als Karussell mit Behälteraufnahmen und den Druckstationen ausgebildet sein, wobei die Direktdruckköpfe einer Druckstation jeweils zusammen mit der Kamera über eine Verfahreinheit parallel zur Transportbahn verfahrbar sind. Zwischen oder nach allen Teildrucken kann dann die Kamera mit der Verfahreinheit an eine Inspektionsposition gegenüber der Behälteraufnahme verfahren werden, um die Teildrucke oder den gesamten Direktdruck zu kontrollieren.

Die Verfahreinheit kann dazu ausgebildet sein, die Kamera gegenüber einer Drehachse der Behälteraufnahme längs, radial und/oder tangential zu verfahren, insbesondere synchron oder in einem konstanten Verhältnis zu einer Bewegung der Behälteraufnahme. Dadurch ist die Kamera bei der Kontrolle besonders flexibel und genau einsetzbar. Beispielsweise kann durch das Verfahren längs bzw. tangential zur Drehachse ein größerer Teildruck inspiziert werden, als dies das Blickfeld der Kamera allein erlauben würde. Durch das radiale Verfahren kann der Fokus der Kamera eingestellt und damit die Kontrolle des Teildrucks besonders genau erfolgen.

Die Kamera kann einen Zeilensensor umfassen und die Verfahreinheit und/oder die Behälteraufnahme kann dazu ausgebildet sein, die Kamera und/oder den Behälter derart zu bewegen, dass bei der Kontrolle eine Relativbewegung quer zum Zeilensensor zwischen der Kamera und einer Behälteroberfläche im Wesentlichen konstant ist. Dadurch kann bei der Kamera ein Zeilensensor eingesetzt und über die Relativbewegung ein zweidimensionales Bild erzeugt werden. Dadurch ist die Kamera einfacher aufgebaut und erfasst die Teildrucke abschnittsweise jeweils senkrecht und im gleichen Abstand zur Behälteroberfläche. Folglich erfolgt auf einfache Weise eine besonders genaue Inspektion der Teildrucke.

Die Verfahreinheit kann dazu ausgebildet sein, die Kamera parallel und/oder quer zur Transportbahn zu verfahren, insbesondere synchron oder in einem konstanten Verhältnis zu einer Transportbewegung des Transporteurs. Dadurch kann die Transportbewegung des Transporteurs kompensiert oder für die Aufnahme von verschiedenen Blickrichtungen auf den Behälter genutzt werden.

Die Direktdruckköpfe und die Kamera können auf einander gegenüberliegenden Seiten der Transportbahn angeordnet sein. Dadurch können einer oder mehrere Direktdruckköpfe auf einer Seite des Behälters drucken und die Kamera kann einen bereits fertig gedruckten Teil auf der gegenüberliegenden Seite des Behälters besonders effizient inspizieren.

Der Transporteur kann ein Karussell mit einer kreisförmigen Transportbahn sein, wobei die Direktdruckköpfe an der Transportbahn außenliegend und die Kamera innenliegend angeordnet sind. Ebenso kann dies umgekehrt sein, so dass die Direktdruckköpfe innenliegend und die Kameras außenliegend angeordnet sind.

Die Inspektionseinrichtung kann ein Schutzgehäuse für die Kamera umfassen. Dadurch wird die Kamera vor Farb- oder UV-Einwirkung der Druckstation besonders effektiv abgeschirmt. Das Schutzgehäuse kann einen Verschluss und/oder eine Schutzscheibe umfassen. Der Verschluss kann jeweils bei der Kontrolle geöffnet und anschließend wieder verschlossen werden. Ferner kann die Schutzscheibe vergütet sein, um Lichtreflexe zu vermeiden.

Die Inspektionseinrichtung kann ein Lasermodul zur Triangulation von 3D-Punkten auf der Oberfläche des Behälters umfassen. Dadurch können beispielsweise Embossings oder Nähte am Behälter besser erkannt werden. Folglich kann die Ausrichtung des Behälters in der Behälteraufnahme erfasst und für die Bedruckung bzw. die Kontrolle der Teildrucke und/oder des Direktdrucks genutzt werden.

Die Inspektionseinrichtung kann eine Beleuchtungseinrichtung, insbesondere ein Ringlicht um ein Objektiv der Kamera und/oder einen Leuchtschirm zum Durchleuchten des Behälters umfassen. Dadurch können Behälterstrukturen, wie beispielsweise Embossings und andere Erkennungsmerkmale vor dem Bedrucken besonders gut erkannt und der Behälter damit ausgerichtet werden. Mittels einer Beleuchtungseinrichtung, wie dem Ringlicht, kann der Behälter bei der Kontrolle besonders gleichmäßig beleuchtet werden. Hierdurch wird eine besonders hohe Dynamik bezüglich des Druckbilds erzielt, so dass die Kontrolle besonders genau und sicher erfolgen kann.

Die Beleuchtungseinrichtung kann eine Hell- und/oder Dunkelfeldbeleuchtungseinheit umfassen. Mittels der Hellfeldbeleuchtungseinheit können die Teildrucke besonders gut erfasst werden. Mit Dunkelfeldbeleuchtungseinheit kann hier gemeint sein, dass das Licht der Beleuchtungseinheit nur indirekt über Brechungen und/oder Streuungen am Behälter zur Kamera gelenkt wird und dabei kein direktes Licht in die Kamera gelangt. Dadurch können Erhebungen, wie ein Embossing oder eine Pressnaht am Behälter besser erkannt werden. Die Dunkelfeldbeleuchtungseinheit kann beispielsweise als zeilenförmige Leuchteinheit ausgebildet sein.

Denkbar ist auch, dass die Beleuchtungseinrichtung zur Beleuchtung mit unterschiedlichen spektralen Anteilen ausgebildet ist, um den Kontrast bei der Kontrolle des Teildrucks zu erhöhen. Beispielsweise kann die Beleuchtungseinrichtung verschiedenfarbige LEDs umfassen. Dadurch kann das Licht der Beleuchtungseinrichtung an die Farbe der Teildrucke angepasst werden.

Die Behälteraufnahmen können jeweils mit einem Drehgeber ausgebildet sein. Dadurch kann der Behälter durch eine Drehung um seine Längsachse mit der Kamera entlang seines Umfangs besonders einfach erfasst werden. Mit dem Drehgeber kann eine Drehposition eines Drehtellers der Behälteraufnahme erfassbar sein. Bevorzugt kann die Kamera dazu einen Zeilensensor umfassen, der insbesondere parallel zu einer Drehachse des Drehgebers angeordnet ist. Dadurch kann mit der Behälteraufnahme eine Drehung um 360° durchgeführt werden, so dass der Behälter mit der Zeilenkamera vollumfänglich erfasst wird. Der Drehgeber kann als Absolut- oder Inkrementalgeber ausgebildet sein. Zur Erfassung der Drehposition des Drehtellers kann der Drehgeber mit einer Motor- bzw. Maschinensteuerung verbunden sein. Denkbar ist auch, dass der Drehgeber in einen Servomotor integriert ist. Die Auflösung des Drehgebers kann in einem Bereich von 2000 - 5000, vorzugsweise 4000 - 5000 Pulse pro Umdrehung liegen. Dadurch können die Teildrucke mit einer hohen Auflösung erfasst werden, so dass deren Lage entsprechend genau justierbar ist.

Die Inspektionseinrichtung kann dazu ausgebildet sein, mit der Kamera und/oder dem Drehgeber eine Ausrichtung des Behälters in der Behälteraufnahme zu erfassen. Vorzugsweise können Erhebungen am Behälter mit der Kamera und der Dunkelfeldbeleuchtungseinheit erfassbar sein, wie beispielsweise ein Embossing, eine Pressnaht oder dergleichen. Dadurch kann der Behälter beim Einlaufen und noch vor dem Bedrucken gegenüber der Druckstation ausgerichtet werden. Ebenso ist denkbar, dass die Inspektionseinrichtung dazu ausgebildet ist, mittels der Lage eines bereits auf dem Behälter aufgedruckten Teildrucks einen Startpunkt eines oder mehrerer nachfolgender Teildrucke in Umfangs- und/oder Längsrichtung des Behälters zu bestimmen.

Die Direktdruckköpfe und/oder die Kamera können modular aufgebaut sein, so dass die Module besonders leicht und ohne Werkzeug wechselbar sind. Hierzu können die Versorgungsleitungen mit Schnellkupplungen versehen sein, die von Hand schnell wechselbar sind.

Darüber hinaus stellt die Erfindung ein Verfahren zur Bedruckung von Behältern mit den Merkmalen des Anspruchs 13 bereit. Vorteilhafte Ausführungsformen des Verfahrens sind in den Unteransprüchen genannt.

Dadurch, dass ein Behälter in einer Druckstation von mehreren justierbaren Direktdruckköpfen mit mehreren Teildrucken eines Direktdrucks versehen wird, können beispielsweise verschiedene Druckfarben des Direktdrucks besonders genau zueinander auf dem Behälter angebracht werden. Dadurch, dass die Lage der Teildrucke auf dem Behälter von einer eigenen der Druckstation zugeordneten Inspektionseinrichtung mit wenigstens einer Kamera inspiziert wird, sind die Toleranzen zwischen der Kamera und der Druckstation besonders gering. Dadurch wird eine besonders hohe Genauigkeit bei der Inspektion erreicht, so dass die Direktdruckköpfe zueinander besonders einfach und genau ausgerichtet werden können.

Das Verfahren kann mit einer Direktdruckmaschine der Ansprüche 1 - 12 bzw. mit den zuvor beschriebenen Merkmalen durchgeführt werden. Das Verfahren kann das Bereitstellen einer Direktdruckmaschine zur Bedruckung von Behältern mit einem Direktdruck umfassen.

Die Kamera kann bei der Inspektion zur Behälterbewegung synchronisiert verfahren werden, so dass sich eine Behälteroberfläche in einem Kamerabild mit konstanter Geschwindigkeit bewegt oder stillsteht. Dadurch kann die Kamera während der Bewegung der Behälteraufnahme zur Inspektion genutzt werden. Ebenso ist durch eine konstante Geschwindigkeit zwischen der Behälteroberfläche und der Kamera die Nutzung eines Zeilensensors möglich, bei dem die Bewegung senkrecht zur Sensorzeile erfolgt. Dadurch ist die Kamera besonders einfach aufgebaut und kann mit der Blickrichtung derart ausgerichtet werden, dass diese möglichst senkrecht auf die Behälteroberfläche ist. Folglich wird die Behälteroberfläche besonders genau aufgelöst.

Der Behälter kann vor dem Bedrucken mit Hilfe der Inspektionseinrichtung gegenüber der Druckstation ausgerichtet werden. Dadurch kann das Verfahren noch effizienter eingesetzt werden. Denkbar ist hier, dass mit der Inspektionseinrichtung bzw. der Kamera Behälterstrukturen erkannt werden, beispielsweise Embossings, Nähte oder dergleichen. Dadurch ist es möglich, die Inspektionseinrichtung zusätzlich auch als Ausrichtungshilfe zu verwenden.

Ferner ist denkbar, dass die Kamera mit einer Verfahreinheit zu Inspektionspositionen bewegt wird, an der jeweils ein Teildruck oder der gesamte Direktdruck inspiziert wird.

Darüber hinaus kann die Kamera mittels der Verfahreinheit referenziert werden. Beispielsweise kann die Behälteraufnahme und/oder ein Teil der Behälteraufnahme und/oder eine Marke an der Behälteraufnahme mittels Bilderkennung erkannt und als Referenzpunkt für die Position der Kamera gegenüber der Behälteraufnahme verwendet werden. Ebenso ist es möglich, dass die Kamera einen oder mehrere der Direktdruckköpfe zur Referenzierung erfasst. Dazu kann die Kamera einen oder mehrere Direktdruckköpfe, einen Teil davon oder eine Marke an einem Direktdruckkopf erfassen. Dadurch können Toleranzen in der Behälteraufnahme bzw. in der Verfahreinheit ausgeglichen werden. Darüber hinaus ist es möglich, eine Kante eines Teildrucks bzw. des gesamten Direktdrucks auszuwerten und deren Distanz zum Behälterträger als SollHöhe zu übernehmen.

Mittels eines bereits auf dem Behälter aufgedruckten Teildrucks kann ein Startpunkt eines oder mehrerer nachfolgender Teildrucke in Umfangs- und/oder Längsrichtung des Behälters bestimmt werden. Dadurch ist die Inspektionseinrichtung auch zur Ausrichtung der Behälter in der Druckstation einsetzbar. Denkbar ist, dass mit dem Startpunkt in Längsrichtung eine Feinpositionierung des Direktdrucks gegenüber den Druckdüsen ermittelt wird. Anders ausgedrückt kann damit bestimmt werden, bei welcher Druckdüse der Druck anfängt, also etwas höher zum Hals oder etwas niedriger zum Boden des Behälters hin.

Mittels der Inspektion der Teildrucke können Druckabstände der justierbaren Direktdruckköpfe bestimmt werden. Dadurch werden die Schärfe und damit der Kontrast des Druckbilds verbessert. Beispielsweise kann über das zuvor erwähnte radiale Verfahren der Kamera der Fokus eingestellt werden, wodurch der Abstand der Kamera zur Behälteroberfläche ermittelt wird. In einem weiteren Schritt kann dann auf Basis des Abstands der Kamera auch ein Abstand der Direktdruckköpfe zur Behälteroberfläche justiert werden.

Darüber hinaus kann das Verfahren die zuvor beschriebenen Merkmale der Direktdruckmaschine, insbesondere die Merkmale der Ansprüche 1 - 12 einzeln oder in beliebigen Kombinationen umfassen.

Weitere Merkmale und Vorteile der Erfindung werden nachfolgend anhand der in den Figuren dargestellten Ausführungsbeispiele näher erläutert. Dabei zeigt:
- Fig. 1: ein Ausführungsbeispiel einer Direktdruckmaschine in einer Draufsicht;
- Fig. 2A-E: ein Ausführungsbeispiel einer Druckstation der Direktdruckmaschine aus der Fig. 1 in einer seitlichen Ansicht jeweils beim Drucken unterschiedlicher Farben; und
- Fig. 3: ein weiteres Ausführungsbeispiel einer Direktdruckmaschine in einer Draufsicht.

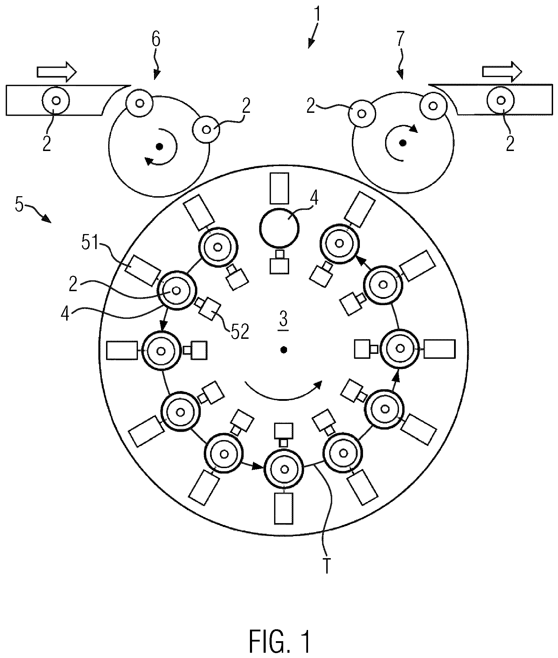

In der Fig. 1 ist ein Ausführungsbeispiel einer Direktdruckmaschine 1 zur Bedruckung von Behältern 2 in einer Draufsicht dargestellt. Zu sehen ist, dass die Behälter 2 mit einem Einlaufstern 6 an den als Karussell ausgebildeten Transporteur 3 übergeben werden. Der Transporteur 3 ist zum Transport der Behälter 2 in Behälteraufnahmen 4 entlang der Transportbahn T ausgebildet. Zu sehen ist, dass jeder Behälteraufnahme 4 eine Druckstation 5 zugeordnet ist, die jeweils mehrere separat justierbare Direktdruckköpfe 51 zur Bedruckung des Behälters 2 mit mehreren Teildrucken umfassen - beispielsweise mit mehreren Druckfarben. Ferner ist jeder Druckstation 5 eine eigene Inspektionseinrichtung mit einer Kamera 52 zugeordnet. Die Direktdruckköpfe 51 und die Kamera 52 sind hier beispielsweise einander gegenüberliegend an den Seiten der Transportbahn T angeordnet. Dadurch können die Direktdruckköpfe 51 eine Seite des Behälters 2 bedrucken und die Kamera 52 die andere Seite mit dem bereits fertigen Druckanteil inspizieren. Denkbar ist allerdings auch jede andere geeignete Anordnung der Direktdruckköpfe 51 bzw. der Kamera 52.

Der Behälter 2 wird nach der Übergabe durch den Einlaufstern 6 in eine Behälteraufnahme 4 und die zugeordnete Druckstation 5 eingebracht und mit dem Transporteur 3 entlang der Transportbahn T transportiert. Nach der Bedruckung mit allen Teildrucken wird der Behälter 2 an den Auslaufstern 7 übergeben und zu weiteren Behandlungsstationen transportiert, beispielsweise zu einer Verpackungsmaschine.

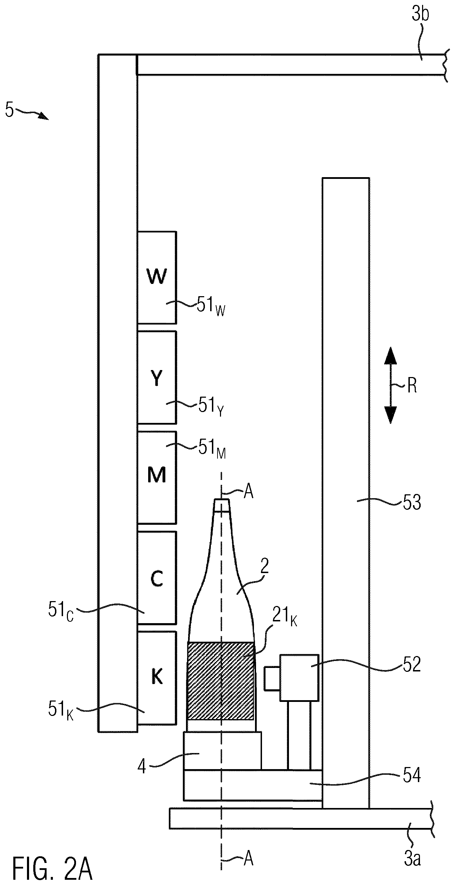

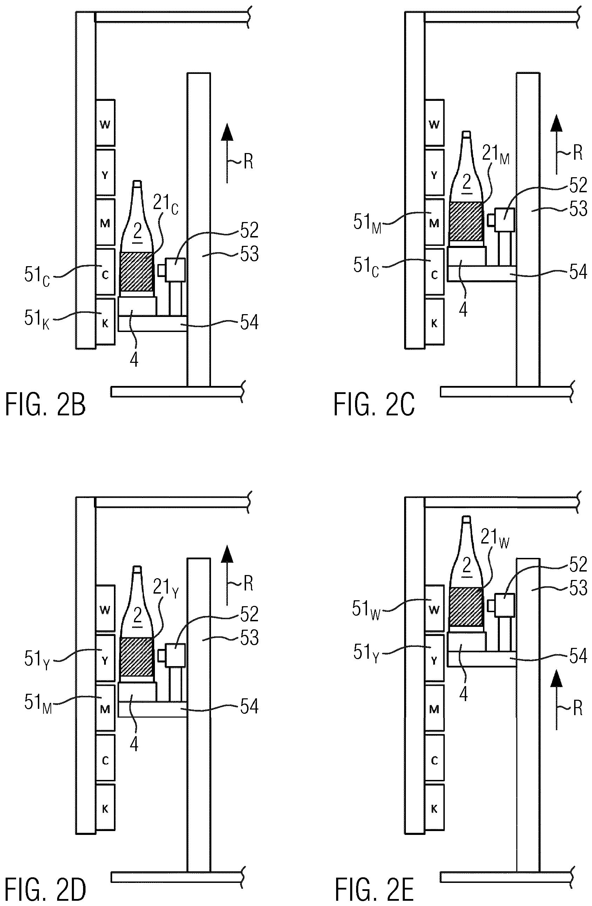

Der genaue Aufbau der Druckstation 5 wird nun anhand der Fig. 2A genauer beschrieben:
In der Fig. 2A ist ein Ausführungsbeispiel der Druckstation 5 der Direktdruckmaschine 1 nach der vorangegangenen Fig. 1 in einer seitlichen Ansicht genauer dargestellt. Zu sehen ist der Karussellträger 3a, an dem die Verfahreinheit 53 für die Behälteraufnahme 4 und die Kamera 52 angeordnet ist. Die Verfahreinheit 53 ist hier eine Lineareinheit, mit der der Ausleger 54 entlang der Richtung R vertikal verfahrbar ist. Denkbar ist beispielsweise, dass die Lineareinheit einen Langstator-Linearmotor umfasst, mit dem zusätzlich auch die Energie- und Datenübertragung zur Kamera 52 erfolgt. Auf dem Aufleger 54 ist weiter die Behälteraufnahme 4 angeordnet, die einen mittels eines Servomotors angetriebenen Drehteller umfasst, mit dem der Behälter 2 um die Drehachse A drehbar ist. Ferner kann die Behälteraufnahme 4 auch eine hier nicht dargestellte Zentrierglocke zur Aufnahme und Zentrierung der Behältermündungen umfassen. Die Kamera 52 ist über einen starren Tragarm mit dem Ausleger 54 verbunden. Denkbar ist jedoch auch, dass die Kamera 52 mit einer weiteren Verfahreinheit längs, radial und/oder tangential zur Drehachse A der Behälteraufnahme 4 verfahrbar ist.

Des Weiteren ist der zweite Träger 3b des Transporteurs 3 zu sehen, an dem die Direktdruccköpfe 51_{K}, 51_{C}, 51_{M}, 51_{Y} und 51_{W} angeordnet sind. Der Direktdruckkopf 51_{K} ist dazu ausgebildet, den Behälter 2 mit einem schwarzen Teildruck 21_{K} zu bedrucken. Dazu ist der Direktdrucckopf 51_{K} mit einer Düsenreihe mit Druckdüsen ausgebildet, die jeweils digital angesteuert einzelne Drucktropfen auf den Behälter 2 abgeben. Durch eine Drehung des Behälters 2 um die Drehachse A wird dann ein flächiger Druck auf den Behälter 2 erzeugt. Entsprechend sind die anderen Direktdruckköpfe 51_{C}-51_{W} dazu ausgebildet, den Behälter 2 mit den Farben Cyan, Magenta, Gelb und Weiß in weiteren Teildrucken zu bedrucken, wie nachfolgend anhand der Fig. 2B-E beschrieben.

Die Kamera 52 ist weiter dazu ausgebildet, den Teildruck 21_{K} nach dem Druck hinsichtlich seiner Lage zu kontrollieren. Dies geschieht beispielsweise mittels Bildverarbeitung, bei dem einzelne Merkmale des Teildrucks 21_{K} erfasst und erkannt werden.

Wie weiter der Fig. 2B zu entnehmen ist, wird die Behälteraufnahme 4 nach dem Bedrucken mit dem Schwarzen Teildruck 21_{K} und der darauf befindliche Behälter 2 durch die Verfahreinheit 53 in der Richtung R angehoben, so dass der Behälter 2 nun auf Höhe des Direktdruckkopfs 51_{C} liegt. Anschließend wird der Behälter 2 erneut gedreht und der Teildruck 21_{C} aufgedruckt. Zusätzlich wird beim Drehen des Behälters 2 der fertige Teil des Teildrucks 21_{C} mit der Kamera 52 erfasst und dessen Lage am Behälter 2 kontrolliert.

Die gleiche Verfahrensweise wird anschließend entsprechend der Fig. 2C-2E für die Druckfarben Magenta, Gelb und Weiß durchgeführt, indem die Behälteraufnahme 4 bzw. die Kamera 52 mit der Verfahreinheit 53 jeweils zu den Druckpositionen der Direktdruckköpfe 51_{M}-51_{W} angehoben und bedruckt wird. Darüber hinaus wird auch die Lage der Teildrucke 21_{M}, 21_{Y}, 21_{W} mit der Kamera 52 erfasst und kontrolliert.

Anders ausgedrückt, wird also nach jedem Bedruckungsschritt bzw. während jedes Bedruckungsschritts die Lage jedes einzelnen Teildrucks 21_{K}, 21_{C}, 21_{M}, 21_{Y}, 21_{W} mit der Kamera 52 erfasst und die Lage kontrolliert. Dadurch ist es möglich, eine eventuelle Fehljustage der Direktdruckköpfe 51_{K}-51_{W} zu kontrollieren und individuelle Werte zur Justage auszugeben. Dadurch erfolgt die Bedruckung der Behälter 2 mit der Direktdruckmaschine 1 in der Fig. 1 bzw. bei den Druckstationen der Fig. 2A-2E mit einer besonders hohen Qualität, wobei dennoch das Einstellen schnell und effizient unterstützt wird. Folglich können Kosten für langwieriges Experimentieren eingespart werden.

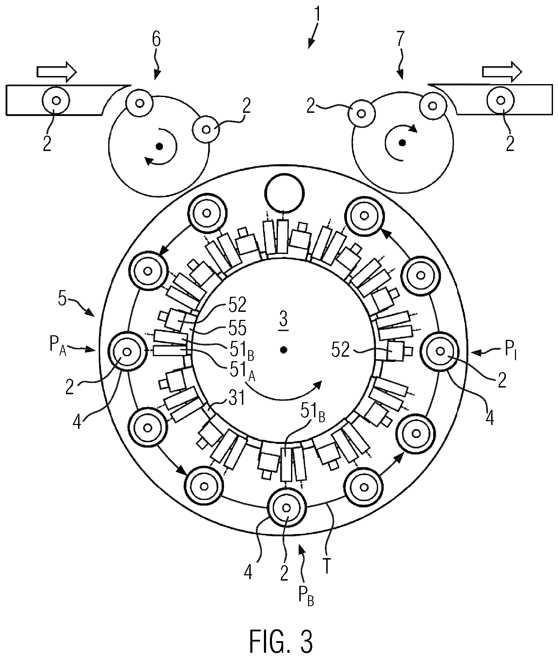

In der Fig. 3 ist ein weiteres Ausführungsbeispiel einer Direktdruckmaschine 1 in einer Draufsicht dargestellt. Diese unterscheidet sich von dem Ausführungsbeispiel in der Fig. 1 im Wesentlichen dadurch, dass mit den Verfahreinheiten 55 nicht die Behälteraufnahmen 4 sondern jeweils die Direktdruckköpfe 51_{A}, 51_{B} und die Kamera 52 verfahren werden.

Zu sehen ist, dass die Behälter 2 zunächst mit dem Einlaufstern 6 an den Transporteur 3, der hier ebenfalls als Karussell ausgebildet ist, übergeben werden. In den Behälteraufnahmen 4 werden dann die Behälter 2 kontinuierlich entlang der Transportbahn T transportiert, mit den Druckstationen 5 bedruckt und anschließend an den Auslaufstern 7 übergeben.

Weiter ist zu sehen, dass der Transporteur 3 mit einem fest verbundenen Ring 31 ausgebildet ist, an dem mehrere Druckstationen 5 angeordnet sind. Die Druckstationen 5 umfassen jeweils die Verfahreinheit 55, zwei oder mehr Direktdruckköpfe 51_{A}, 51_{B} und eine Kamera 52. Mittels der Verfahreinheit 55 sind die Direktdruckköpfe 51_{A}, 51_{B} zusammen mit der Kamera 52 tangential gegenüber der Transportbahn T verfahrbar. Die beiden Direktdruckköpfe 51_{A} und 51_{B} jeder Druckstation 5 sind hier lediglich exemplarisch stellvertretend für eine Vielzahl von Direktdruccköpfen dargestellt.

Dadurch ist es möglich, den Direktdruckkopf 51_{A} in der Position P_{A} so zu verfahren, dass dieser zum Drucken bereit ist und dem Behälter 2 an der Position P_{A} gegenübersteht. Der Behälter 2 wird nun um seine Längsachse gedreht und ein Teildruck einer ersten Farbe aufgebracht. Gleichzeitig wird der Behälter 2 kontinuierlich entlang der Transportbahn T weiter transportiert. Denkbar ist allerdings auch, dass der Transporteur 3 die Behälter 2 intermittierend transportiert.

Befindet sich nun die Behälteraufnahme 4 mit dem Behälter 2 an der Position P_{B}, so steht der Direktdruckkopf 51_{B} mit einer zweiten Farbe zum Drucken bereit. Der Behälter wird erneut um seine Längsachse gedreht und der zweite Teildruck in der zweiten Farbe aufgebracht. Während des Weitertransports entlang der Transportbahn T wird nun die Kamera 22 mit der Verfahreinheit 55 an die Inspektionsposition verfahren, die dann an der Position P_{I} dem Behälter 2 gegenübersteht. Nun wird der Behälter 2 mittels der Behälteraufnahme 4 um seine Längsachse gedreht und die beiden Teildrucke inspiziert.

Denkbar ist auch, dass die Kamera 52 mit der Verfahreinheit 55 zwischen den beiden Positionen P_{A} und P_{B} zur Inspektion zum Behälter 2 verfahren wird und der Teildruck des Direktdrucckopfs 51_{A} separat kontrolliert wird.

Auch hier ist durch die Kontrolle der Teildrucke jeweils die Lage kontrollierbar und darauf basierend können die Direktdruckköpfe 51_{A} bzw. 51_{B} dann schnell und genau justiert werden.

Insgesamt werden die Direktdruckmaschinen 1 der Fig. 1-3 wie folgt eingesetzt:
Die Behälter 2 werden in den Behälteraufnahmen 4 des Transporteurs 3 entlang der Transportbahn T transportiert und mit den in Behälteraufnahmen 4 zugeordneten Druckstationen 5 bedruckt. Dabei wird jeweils in einer Druckstation 5 ein Behälter 2 von mehreren justierbaren Direktdruckköpfen 51 mit mehreren Teildrucken 21 eines Direktdrucks versehen. Ferner wird die Lage der Teildrucke 21 auf dem Behälter 2 mit der eigens der Druckstation 5 zugeordneten Kamera 52 inspiziert. Dadurch ist es möglich, die Lage der einzelnen Teildrucke 21 einfach und hochgenau gegenüber den Direktdruckköpfen 51 zu erfassen und diese darauf basierend zu justieren. Die Justage ist dadurch besonders genau, einfach und kostengünstig.

Folgende zusätzliche Ausführungsformen sind bei den Ausführungsbeispielen der Fig. 1 - 3 zusätzlich in beliebigen Kombinationen möglich:
Der Behälter 2 kann vor dem Bedrucken mit Hilfe der Inspektionseinrichtung bzw. Kamera 52 gegenüber der Druckstation 5 ausgerichtet werden. Dies kann beispielsweise anhand von Behälterstrukturen, wie Embossings, Nähten oder dergleichen erfolgen.

Ferner ist denkbar, dass die Inspektionseinrichtung ein Schutzgehäuse für die Kamera 52 umfasst. Dadurch ist die Kamera 52 besser vor Einwirkungen der Druckfarbe geschützt.

Ferner kann in der Inspektionseinrichtung ein Lasermodul zur Triangulation von 3D-Punkten auf der Oberfläche des Behälters angeordnet sein. Dadurch können 3D-Strukturen des Behälters, wie eben Embossings oder Nähte besser erfasst werden.

Ferner ist auch denkbar, dass die Inspektionseinrichtung eine Beleuchtungseinrichtung, wie ein Ringlicht um das Objektiv der Kamera 52 umfasst. Darüber hinaus kann auch ein Leuchtschirm zum Durchleuchten des Behälters 2 in der Inspektionseinrichtung angeordnet sein, so dass Behälterstrukturen im Durchlicht erfasst werden können.

Es versteht sich, dass in den zuvor beschriebenen Ausführungsbeispielen genannte Merkmale nicht auf diese speziellen Kombinationen beschränkt und auch in beliebigen anderen Kombinationen möglich sind.

## Patentansprüche

1. Direktdruckmaschine (1) zur Bedruckung von Behältern (2), mit einem Transporteur (3) zum Transport der Behälter (2) in Behälteraufnahmen (4) entlang einer Transportbahn (T) und mit mehreren jeweils den Behälteraufnahmen (4) zugeordneten Druckstationen (5), die jeweils mit mehreren separat justierbaren Direktdruckköpfen (51) zur Bedruckung eines Behälters (2) mit mehreren Teildrucken (21) eines Direktdrucks ausgebildet sind,
wobei den Druckstationen (5) jeweils eine eigene Inspektionseinrichtung mit wenigstens einer Kamera (52) zugeordnet ist, um die Lage der Teildrucke (21) auf dem Behälter (2) zu kontrollieren, und
wobei die Kamera (52) mit einer Verfahreinheit (53, 55) verfahrbar ist,
**dadurch gekennzeichnet,**
**dass** die Verfahreinheit (53) dazu ausgebildet ist, die zugeordnete Behälteraufnahme (4) gemeinsam mit der Kamera (52) gegenüber den Direktdruckköpfen (51) zu verfahren,
oder
**dass** die Verfahreinheit (55) dazu ausgebildet ist, die Direktdruckköpfe (51) gemeinsam mit der Kamera (52) gegenüber der zugeordneten Behälteraufnahme (4) zu verfahren.

2. Direktdruckmaschine (1) nach Anspruch 1, wobei die Verfahreinheit einen Linearmotor umfasst.

3. Direktdruckmaschine (1) nach Anspruch 1 oder 2, wobei die Verfahreinheit (53, 55) dazu ausgebildet ist, die Kamera (52) gegenüber einer Drehachse (A) der Behälteraufnahme (4) längs, radial und/oder tangential zu verfahren, insbesondere synchron oder in einem konstanten Verhältnis zu einer Bewegung der Behälteraufnahme (4).

4. Direktdruckmaschine (1) nach einem der vorangegangenen Ansprüche, wobei die Kamera (52) einen Zeilensensor umfasst und die Verfahreinheit (53, 55) und/oder die Behälteraufnahme (4) dazu ausgebildet sind, die Kamera (52) und/oder den Behälter (2) derart zu bewegen, dass bei der Kontrolle eine Relativbewegung quer zum Zeilensensor zwischen der Kamera (52) und einer Behälteroberfläche im Wesentlichen konstant ist.

5. Direktdruckmaschine (1) nach einem der vorangegangenen Ansprüche, wobei die Verfahreinheit (53, 55) dazu ausgebildet ist, die Kamera (4) parallel und/oder quer zur Transportbahn (T) zu verfahren, insbesondere synchron oder in einem konstanten Verhältnis zu einer Transportbewegung des Transporteurs (3).

6. Direktdruckmaschine (1) nach einem der vorangegangenen Ansprüche, wobei die Direktdruckköpfe (51) und die Kamera (52) auf einander gegenüberliegenden Seiten der Transportbahn (T) angeordnet sind.

7. Direktdruckmaschine (1) nach einem der vorangegangenen Ansprüche, wobei der Transporteur (3) ein Karussell mit einer kreisförmigen Transportbahn (T) ist und wobei die Direktdruckköpfe (51) an der Transportbahn (T) außenliegend und die Kameras (52) innenliegend angeordnet sind oder entsprechend umgekehrt.

8. Direktdruckmaschine (1) nach einem der vorangegangenen Ansprüche, wobei die Inspektionseinrichtung ein Schutzgehäuse für die Kamera (52) umfasst.

9. Direktdruckmaschine (1) nach einem der vorangegangenen Ansprüche, wobei die Inspektionseinrichtung ein Lasermodul zur Triangulation von 3D-Punkten auf der Oberfläche des Behälters (2) umfasst.

10. Direktdruckmaschine (1) nach einem der vorangegangenen Ansprüche, wobei die Inspektionseinrichtung eine Beleuchtungseinrichtung, insbesondere ein Ringlicht um ein Objektiv der Kamera (4) und/oder einen Leuchtschirm zum Durchleuchten des Behälters (2) umfasst.

11. Direktdruckmaschine (1) nach einem der vorangegangenen Ansprüche, wobei die Beleuchtungseinrichtung eine Hell- und/oder Dunkelfeldbeleuchtungseinheit umfasst.

12. Direktdruckmaschine (1) nach einem der vorangegangenen Ansprüche, wobei die Behälteraufnahmen (4) jeweils mit einem Drehgeber ausgebildet sind.

13. Verfahren zur Bedruckung von Behältern (2) mit einem Direktdruck, wobei die Behälter (2) in Behälteraufnahmen (4) eines Transporteurs (3) entlang einer Transportbahn (T) transportiert und mit den Behälteraufnahmen (4) zugeordneten Druckstationen (5) bedruckt werden, wobei ein Behälter (2) in einer Druckstation (5) von mehreren justierbaren Direktdruckköpfen (51) mit mehreren Teildrucken (21) eines Direktdrucks versehen wird,
wobei die Lage der Teildrucke (21) auf dem Behälter (2) von einer eigenen der Druckstation (5) zugeordneten Inspektionseinrichtung mit wenigstens einer Kamera (52) inspiziert wird, und
wobei die Kamera (52) mit einer Verfahreinheit (53, 55) verfahren wird,
**dadurch gekennzeichnet,**
**dass** die Verfahreinheit (53) die zugeordnete Behälteraufnahme (4) gemeinsam mit der Kamera (52) gegenüber den Direktdruckköpfen (51) verfährt,
oder
**dass** die Verfahreinheit (55) die Direktdruckköpfe (51) gemeinsam mit der Kamera (52) gegenüber der zugeordneten Behälteraufnahme (4) verfährt.

14. Verfahren nach Anspruch 13, wobei die Kamera (52) bei der Inspektion zur Behälterbewegung synchronisiert verfahren wird, so dass sich eine Behälteroberfläche in einem Kamerabild mit konstanter Geschwindigkeit bewegt oder still steht.

15. Verfahren nach Anspruch 13 oder 14, wobei der Behälter (2) vor dem Bedrucken mithilfe der Inspektionseinrichtung gegenüber der Druckstation (5) ausgerichtet wird.

16. Verfahren nach einem der Ansprüche 13 - 15, wobei mittels der Lage eines bereits auf dem Behälter aufgedruckten Teildrucks ein Startpunkt eines oder mehrerer nachfolgender Teildrucke in Umfangs- und/oder Längsrichtung des Behälters (2) bestimmt wird.

17. Verfahren nach einem der Ansprüche 13 - 16, wobei mittels der Inspektion der Teildrucke (21) Druckabstände der justierbaren Direktdruckköpfe (51) bestimmt werden.

## Claims

1. Direct printing machine (1) for printing onto containers (2) with a conveyor (3) for transporting said containers (2) in container receptacles (4) along a transport path (T) and with several printing stations (5) which are respectively associated with said container receptacles (4) and which are each formed with several separately adjustable direct print heads (51) for printing several partial prints (21) of a direct print onto a container (2),
where said printing stations (5) are each associated with their individual inspection device with at least one camera (52) to inspect the position of said partial prints (21) on said container (2), and
where said camera (4) is movable by a positioning unit (53, 55),
**characterized in that**
said positioning unit (53) is configured to move said associated container receptacle (4) together with said camera (52) relative to said direct print heads (51),
or
**in that** said positioning unit (55) is configured to move said direct print heads (51) together with said camera (52) relative to said associated container receptacle (4).

2. Direct printing machine (1) according to claim 1, where said positioning unit comprises a linear motor.

3. Direct printing machine (1) according -to claim 1 or 2, where said positioning unit (53, 55) is configured to move said camera (52) longitudinally, radially and/or tangentially relative to an axis (A) of rotation of said container receptacle (4), in particular synchronolously or in a constant relationship relative to a motion of said container receptacle (4).

4. Direct printing machine (1) according to one of the preceding claims, where said camera (52) comprises a line sensor, and said positioning unit (53, 55) and/or said container receptacle (4) are configured to move said camera (52) and/or said container (2) such that a relative motion transverse to said line sensor between said camera (52) and a container surface is substantially constant during inspection.

5. Direct printing machine (1) according to one of the preceding claims, where said positioning unit (53, 55) is configured to move said camera (4) parallel and/or transversely to said transport path (T), in particular synchronously or in a constant relationship relative to a transport motion of said conveyor (3).

6. Direct printing machine (1) according to one of the preceding claims, where said direct print heads (51) and said camera (52) are located on mutually opposite sides of said transport path (T).

7. Direct printing machine (1) according to one of the preceding claims, where said conveyor (3) is a carousel with a circular transport path (T) and where said direct print heads (51) are disposed on said transport path (T) on the outside and said camera (52) on the inside or vice versa, respectively.

8. Direct printing machine (1) according to one of the preceding claims, where said inspection device comprises a protective housing for said camera (52).

9. Direct printing machine (1) according to one of the preceding claims, where said inspection device comprises a laser module for triangulating 3D points on the surface of said container (2).

10. Direct printing machine (1) according to one of the preceding claims, where said inspection device comprises an illumination device, in particular a ring light around a lens of said camera (4) and/or a luminescent screen for illuminating through said container (2).

11. Direct printing machine (1) according to one of the preceding claims, where said illumination device comprises a bright and/or dark field illumination unit.

12. Direct printing machine (1) according to one of the preceding claims, where said container receptacles (4) are each formed with a rotary position sensor.

13. Method for printing a direct print onto containers (2), where said container (2) is transported in container receptacles (4) of a conveyor (3) along a transport path (T) and applied a print by printing stations (5) associated with said container receptacles (4), where a container (2) is applied several partial prints (21) of a direct print in a printing station (5) by several adjustable direct print heads (51),
where the position of said partial prints (21) on said container (2) is inspected by an individual inspection device with at least one camera (52) associated with said printing station (5),
where said camera (52) is moved by a positioning unit (53, 55),
**characterized in that**
said positioning unit (53) moves said associated container receptacle (4) together with said camera (52) relative to said direct print heads (51),
or
**in that** said positioning unit (55) moves said direct print heads (51) together with said camera (52) relative to said associated container receptacle (4).

14. Method according to claim 13, where said camera (52) is during inspection moved in a manner synchronized to the container motion, so that a container surface in a camera image moves at a constant speed or is still.

15. Method according to claim 13 or 14, where said container (2) is prior to printing aligned with the aid of said inspection device relative to said printing station (5).

16. Method according to one of the claims 13 - 15, where a starting point of one or more subsequent partial prints in the circumferential and/or longitudinal direction of said container (2) is determined by way of the position of a partial print that is already printed onto said container.

17. Method according to one of the claims 13 - 16, where printing distances of said adjustable direct print heads (51) are determined by way of inspecting said partial prints (21).

## Revendications

1. Machine d'impression directe (1) pour l'impression de contenants (2), avec un convoyeur (3) pour le transport des contenants (2) dans des réceptacles de contenants (4) le long d'un chemin de transport (T), et avec plusieurs stations d'impression (5) qui sont associées chacune aux réceptacles de contenants (4) et qui sont réalisées chacune avec plusieurs têtes d'impression directe (51) réglables séparément pour l'impression d'un contenant (2) avec plusieurs impressions partielles (21) d'une impression directe,
les stations d'impression (5) étant chacune dotée de son propre dispositif d'inspection avec au moins une caméra (52) afin de vérifier la position des empreintes partielles (21) sur le conteneur (2), et
dans laquelle la caméra (52) peut être déplacée par une unité de déplacement (53, 55),
**caractérisé**
**en ce que** l'unité de déplacement (53) est conçue pour déplacer le porte-conteneur (4) associé avec la caméra (52) par rapport aux têtes d'impression directe (51), ou
**en ce que** l'unité de déplacement (55) est conçue pour déplacer les têtes d'impression directe (51) avec la caméra (52) par rapport au réceptacle de conteneur associé (4).

2. Machine d'impression directe (1) selon la revendication 1, dans laquelle l'unité de déplacement comprend un moteur linéaire.

3. Machine d'impression directe (1) selon les revendications 1 ou 2, dans laquelle l'unité de déplacement (53, 55) est conçue pour déplacer la caméra (52) longitudinalement, radialement et/ou tangentiellement par rapport à un axe de rotation (A) du porte-contenant (4), en particulier de manière synchrone ou dans un rapport constant avec un mouvement du porte-contenant (4).

4. Machine d'impression directe (1) selon l'une des revendications précédentes, dans laquelle la caméra (52) comprend un capteur de lignes et l'unité de déplacement (53, 55) et/ou le support de contenant (4) sont conçus pour déplacer la caméra (52) et/ou le contenant (2) de telle sorte que, lors de l'inspection, un mouvement relatif transversal au capteur de lignes entre la caméra (52) et une surface du contenant soit sensiblement constant.

5. Machine d'impression directe (1) selon l'une des revendications précédentes, dans laquelle l'unité de déplacement (53, 55) est conçue pour déplacer la caméra (4) parallèlement et/ou transversalement au chemin de transport (T), en particulier de manière synchrone ou dans un rapport constant avec un mouvement de transport du convoyeur (3).

6. Machine d'impression directe (1) selon l'une des revendications précédentes, dans laquelle les têtes d'impression directe (51) et la caméra (52) sont disposées sur des côtés opposés du chemin de transport (T).

7. Machine d'impression directe (1) selon l'une des revendications précédentes, dans laquelle le convoyeur (3) est un carrousel avec un chemin de transport circulaire (T) et dans laquelle les têtes d'impression directe (51) sont disposées à l'extérieur du chemin de transport (T) et les caméras (52) sont disposées à l'intérieur, ou vice versa, en conséquence.

8. Machine d'impression directe (1) selon l'une des revendications précédentes, le dispositif d'inspection comprenant un boîtier de protection pour la caméra (52).

9. Machine d'impression directe (1) selon l'une des revendications précédentes, dans laquelle le dispositif d'inspection comprend un module laser pour la triangulation de points 3D sur la surface du contenant (2).

10. Machine d'impression directe (1) selon l'une des revendications précédentes, dans laquelle le dispositif d'inspection comprend un dispositif d'éclairage, en particulier une lumière annulaire autour d'un objectif de la caméra (4) et/ou un écran fluorescent pour la transillumination du contenant (2).

11. Machine d'impression directe (1) selon l'une des revendications précédentes, dans laquelle le dispositif d'éclairage comprend une unité d'éclairage en champ clair et/ou foncé.

12. Machine d'impression directe (1) selon l'une des revendications précédentes, dans laquelle les porte-contenants (4) sont chacun conçus avec un encodeur rotatif.

13. Procédé d'impression de contenants (2) par impression directe, dans lequel les contenants (2) sont transportés le long d'un chemin de transport (T) dans des réceptacles à contenants (4) d'un convoyeur (3) et imprimés avec des stations d'impression (5) associées aux réceptacles à contenants (4),
dans lequel un contenant (2) est pourvu de plusieurs impressions partielles (21) d'une impression directe dans une station d'impression (5) par plusieurs têtes d'impression directe réglables (51),
dans lequel la position des empreintes partielles (21) sur le contenant (2) est contrôlée par un dispositif d'inspection séparé avec au moins une caméra (52) affectée à la station d'impression (5), et
dans lequel la caméra (52) est déplacée avec une unité de déplacement (53, 55),
**caractérisé**
**en ce que** l'unité de déplacement (53) traverse le porte-contenant associé (4) avec la caméra (52) en face des têtes d'impression directe (51),
ou bien
**en ce que** l'unité de déplacement (55) traverse les têtes d'impression directe (51) avec la caméra (52) par rapport au porte-contenant associé (4).

14. Procédé selon la revendication 13, dans lequel la caméra (52) est synchronisée avec le mouvement du contenant pendant l'inspection, de sorte qu'une surface du contenant dans une image de la caméra se déplace à une vitesse constante ou s'immobilise.

15. Procédé selon les revendications 13 ou 14, dans lequel le contenant (2) est aligné par rapport à la station d'impression (5) au moyen du dispositif de contrôle avant l'impression.

16. Procédé selon l'une des revendications 13 à 15, dans lequel un point de départ d'une ou plusieurs pressions partielles ultérieures dans la direction circonférentielle et/ou longitudinale du contenant (2) est déterminé au moyen de la position d'une pression partielle déjà imprimée sur le contenant.

17. Procédé selon l'une des revendications 13 à 16, dans lequel, au moyen de l'inspection des impressions partielles (21), les distances d'impression des têtes d'impression directe réglables (51) sont déterminées.
